# EUROPEAN PATENT APPLICATION

(11) **EP 1 460 110 A1**
(43) Date of publication of application: **22.09.2004**
(21) Application number: 03006306.9
(22) Date of filing: 19.03.2003
(51) Int. Cl.: C09B 23/14, G11B 7/24

(54) **New halogeno-aromatic substituted indolestyryl dyes for optical data recording media**

(71) Applicant: CLARIANT INTERNATIONAL LTD., 4132 Muttenz (CH)
(72) Inventor: The designation of the inventor has not yet been filed

(57) **Abstract**

The present invention relates to hemicyanine dyes, in particular halogeno-aromatic substituted indolestyryl dyes, which are useful as dyes in optical layers. The dyes exert high light-fastnesses properties and excellent recording characteristics.
In particular the invention relates to optical layers comprising such dyes, to a method for manufacturing such optical layers and to optical recording media comprising such optical layers.

## Description

The present invention relates to hemicyanine dyes, in particular halogeno-aromatic substituted indolestyryl dyes, which exert high light-fastnesses properties and excellent recording characteristics when used in optical recording media.

Organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

EP 1 156 084 A2 (Samsung Electronics) discloses hemicyanine dyes of the following formula 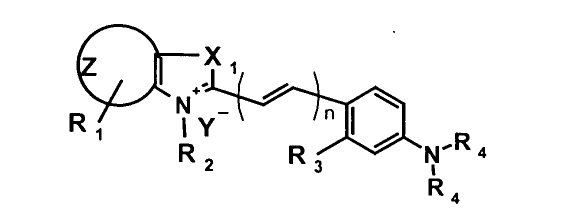 wherein Z is preferably a benzene ring, X₁ is preferably C(CH₃)₂ , R₂ is an alkyl group of 1 to 5 carbon atoms, preferably methyl and R₄ is is an alkyl group of 1 to 5 carbon atoms, preferably ethyl. The dyes are described to be useful as dyes for optical recording media.

US 6,103,331 (Fuji Electric) discloses an optical recording medium comprising an organic dye thin film, wherein the dye is of the hemicyanine type. As represented in the above formula the substituent R₂ of the indolestyryl ring is defined to be an alkyl group, an aryl group, an arylalkyl group, an alkoxyalkyl group, each hacing 1 to 18 carbon atoms, or a C₃₋₁₈ substituent havin an unsaturated bond. Preferably the groups are methyl, ethyl, butyl, -(CH₂)₂-phenyl, propanol, methyl-ethyl ester, methyl-ethyl ether and various unsaturated branched or unbranched alkenyls.

The hemicyanine dyes known in the art have various drawbacks. First, not all derivatives are cheaply and easily accessible and second , not all derivatives provide for properties as required for optical recording media of the "next generation", in particular for high-density recording materials in a laser wavelength range of from 500 to 700 nm.

It has therefore been an objective of the invention to provide new hemicyanine dyes, suitable for high-density recording materials in a laser wavelength range of from 500 to 700 nm.
It further has been an objective of the invention, that the new dyes are easy to synthesise with high yields and high purities at low costs.

It has been found that halogeno-aromatic substituted indolestyryl dyes according to the invention meet the above objectives.

Among the large number of "push-pull" structures already synthesised, only few are involving fluoro or more generally halogeno aromatic rings as acceptor groups. So far their use seems to be limited to stilbene bearing alkoxy functions.

The present invention therefore relates to new halogeno-aromatic substituted indolestyryl dyes of the formula (I) 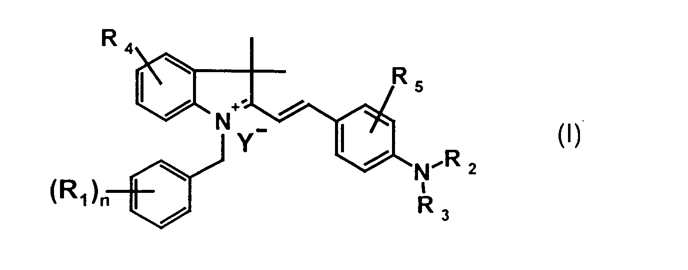 wherein
R₁ independently is halogen,
   preferably F, Cl, Br,
   most preferably F;
n is a number from 1 to 5,
   preferably from 3 to 5,
   most preferably 3 or 5;
R₂ and R₃ are selected from the group consisting of hydrogen atoms, alkyl groups containing one to eight carbon atoms , alkoxy groups containing one to eight carbon atoms and one to four oxygen atom, alkylester groups (-CO₂R⁶) containing one to eight carbon atoms, and a pyrrolidine ring formed by connecting R² and R³, a julolidine ring formed by one of R² or R³;
   preferably R₂ and R₃ are selected from the group consisting of hydrogen atoms, alkyl groups containing one to three carbon atoms , and a pyrrolidine ring formed by connecting R² and R³;
   most preferably R₂ and R₃ are ethyl or a pyrrolidine ring formed by connecting R² and R³;
R⁴ and R⁵ are selected the group consisting of hydrogen atoms, hydroxyl groups, alkyl groups with one to eight carbon atoms (C₁₋₈), trifluoromethyl groups, alkoxy groups containing one to eight carbon atoms and one to four oxygen atom, carboxylic acid groups, nitric acid groups, amide groups (-CONR⁷R⁸), sulfonic acid groups, -SO₃R⁸, alkylester groups (-CO₂R⁶) containing one to eight carbon atoms, and halogen;
   preferably R₄ and R₅ are selected from the group consisting of hydroxyl groups,
   alkyl groups containing one to three carbon atoms, nitric acid groups and halogen;
   most preferably R₄ and R₅ are methyl, hydroxy, nitro or chloro;most preferably R₄ and R₅ are methyl, hydroxy, nitro or chloro; the preferred positions for R₄ are para to the positions wheron the N-heterocyclic ring is attached; most preferred position for R₄ is para to the N-position;
   the preferred positions for R₅ is ortho to the ethylene bridge;
R⁶ is selected from the group consisting of an alkyl group with one to eight carbon atoms (C₁₋₈), C₂F₄ and CF₃;
R⁷ and R⁸ are independently selected from the group consisting of hydrogen and alkyl group with one to six carbon atoms (C₁₋₆);
Y⁻ is selected from ClO₄⁻, SbF₆⁻, PF₆⁻, BF₄⁻, TCNQ⁻ (Tetracyano-p-quinodimethane), TCNE⁻ (Tetracyanoethylene), Cl⁻, Br⁻, I⁻;
   preferably Y⁻ is SbF₆⁻, PF₆⁻, Cl⁻, Br⁻ , I⁻.

The new dyes are easy to synthesise with high yields and high purities at low costs. They further possess the required optical characteristics for high-density recording materials in a laser wavelength range of from 500 to 700 nm. They possess an excellent solubility in organic solvents, an excellent ligth stability and a decomposition temperature of 240-300°C.

In particular the new halogeno-aromatic substituted indolestyryl compounds possess a good light sensitivity and superior chemical and thermal stability in the recording layer of recordable optical discs, for example in WORM (write only read many) disc formats.

### Preparation of the indolestyryl dyes

Generally the synthesis of hemicyanine dyes is known in the art. The halogeno-aromatic substituted indolestyryl dye of formula (I) is obtained by condensing compounds (A) with coumpounds (B) preferably in a ratio of 1 to 1.

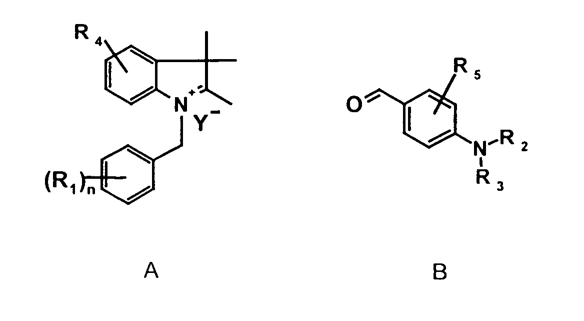

The solvent used in the condensation reaction is selected from from C₁₋₈ alcohols, aromatics, dimethylformamide (DMF), N-methylpyrolidone (NMP) or a mixture of a pure solvent of this type with water.

### Preparation of an optical layer

An optical layer according to the invention comprises an indolestyryl dye compound of formula (I) or a mixture of indolestyryl dye compounds of formula (I).

A method for producing an optical layer according to the invention comprises the following steps
(a) providing a substrate
(b) dissolving a compound of formula (I) or a mixture of compounds of formula (I) in an organic solvent to form a solution,
(c) coating the solution (b) on the substrate (a);
(d) evaporating the solvent to form a dye layer.

### Preparing of the high density optical disk recording medium

It is an objective of the invention to provide a high-density data storage medium using the new halogeno-aromatic substituted indolestyryl dyes in its recording layer. The new halogeno-aromatic substituted indolestyryl compounds can be directly applied to usual DVD's and the recording layers of other high-density data storage media.

A high-density data storage medium according to the invention prefrably is a recordable optical disc comprising: a first substrate, which is a transparent substrate with grooves, a recording layer, which is formed on the first substrate surface using the new halogeno-aromatic substituted indolestyryl compounds, a reflective layer formed on the recording layer, a second substrate, which is a transparent substrate with grooves connected to the reflective layer with an attachment layer.

A further objective of the invention is to provide a method for producing a high-density data storage medium, preferably a recordable optical disc, comprising the following steps:
(a) providing a first substrate
(b) dissolving the halogeno-aromatic substituted indolestyryl dye as set forth above in an organic solvent to form a solution,
(c) coating the first solution on the first substrate;
(d) drying the solution to form a halogeno-aromatic substituted indolestyryl dye layer; and
(e) disposing a reflection layer on the halogeno-aromatic substituted indolestyryl dye layer; and
(f) disposing a second substrate on the reflection layer.

In a prefered embodiment, 1.8g of the new halogeno-aromatic substituted indolestyryl compound is dissolved in 2,2,3,3-tetrafluoropropanol to form 100 g solution. This solution is applied on the first substrate by coating. Afterwards, a drying procedure is employed to form a recording layer of the new halogeno-aromatic substituted indolestyryl on the substrate surface.

The recording layer is coated with a reflective layer by sputtering a metal material, followed by the application of a resin protection layer. Finally, a second substrate is provided to the reflective layer to form a protection layer.

Preferably, the first substrate and the second substrate are transparent substrates with lands and grooves. The track pitch is preferably between 0.3 µm and 0.8 µm, the groove depth between 70 nm and 200 nm.

The material of the substrate can be polyesters, polycarbonates (PC), polymethacrylate (PMMA), epoxy resin, polyester resin and polyolefin resin. Preferably the the substrate is polycarbonate (PC) or polymethylmethacrylate (PMMA)

The formation method of the optical layer can be spin coating, vacuum evaporation, jet coating, rolling coating, or soaking. Preferably spin coating is used, to form a recording layer of 70 nm to 250 nm thickness.

In the steps (b) and (c), the organic solvent can be C₁₋₈ alcohol, C₁₋₈ ketone, C₁₋₈ ether, halogen compound or amide. Wherein C₁₋₈ alcohol can be methanol, ethanol, isopropanol, diacetone alcohol (DAA), 2,2,3,3-tetrafluoropropanol, trichloroethanol, 2-chloroethanol, octafluoropentanol or hexafluorobutanol. C₁₋₈ ketone can be acetone, methylisobutylketone, methylethylketone, or 3-hydroxy-3-methyl-2-butanone; the halogen compound can be chloroform, dichloromethane, or 1-chlorobutane; and the amide can be dimethylformamide or dimethylacetamide.

After the halogeno-aromatic substituted indolestyryl dye is dissolved in the above-mentioned organic solvent, it is coated on the first substrate by methods, such as spraying, spin coating, jet coating, rolling coating, or soaking. Following the swing and dry process to drive the organic solvent away, the metal complex layer is deposited on the first substrate.

The material of the reflective layer sputtered on the recording layer is selected from gold, silver, aluminum, silicon, copper, silver-titanium alloys, silver-chromium alloys, and silver-copper alloys.

The thickness of the recording layer on the substrate is between 70 nm and 250 nm. A reflective layer of 50 nm to 200 nm thickness is directly coated on the recording layer.

Finally, the substrate with the reflective layer and the recording layer is combined with another blank substrate with a thickness of 0.6 mm. The connection can be achieved using spin coating, half-tone printing, hot gluing, or double-sided tapes.
The final product is a high-density recordable optical disc of about 120 mm thickness.

It has been found, that the halogeno-aromatic side groups in the structure of the new halogeno-aromatic substituted indolestyryl dyes surprisingly enhance the photosensitivity and the stability to light and heat compared to dyes known in the art.

Additionally, the halogeno-aromatic substituted indolestyryl dyes provide for an extremely good solubility in organic solvents, which is ideal for the spin-coating process to manufacture optical layers.

Thus, it is of great advantage to use these new halogeno-aromatic substituted indolestyryl compounds in the recording layer of high-density recordable optical discs.

### Examples

Synthesis of compounds. All halogeno-aromatic substituted indolestyryl compounds according to the invention can be prepared using standard procedures. The halogeno-aromatic substituted indolestyryl compounds can be purified by recrystallization from an acetonitrile/ethyl acetate solution. The precipitate is isolated following classical methods.

### Example 1

0.04 mol of 2,3,3-Trimethyl-3H-indole and 0.042 mol of pentafluoroiodomethylbenzene are heated to reflux in 50 ml of methylethylketone for 12 hours. To this solution is then added 0.042 mol of 4-diethylamino benzaldehyde. After 5 hours at this temperature, the mixture is cooled to room temperature and the precipitated crystalline dye of formula (Ia) is filtered, washed with cold alcohol, water and dried in vacuo to give 2-[2-(4-Diethylamino-phenyl)-vinyl]-3,3-dimethyl-1-pentafluorophenylmethyl-3H-indolium iodide.

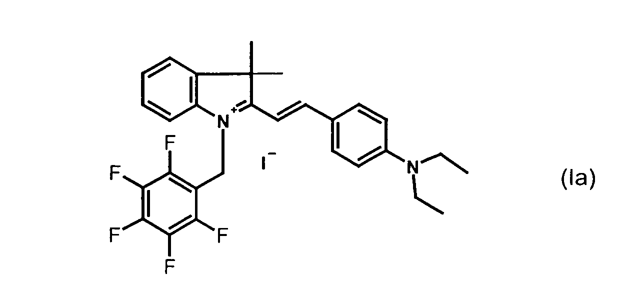

Yield : 87%; NMR ¹H (360 MHz, D₆-DMSO): 1.2 (t, 6H, CH₃), 1.8 (s, 6H, CH₃), 3.6 (q, 4H, CH₂), 6.0 (s, 2H, CH₂), 7.0 (d, 2H, CH), 7.6 (d, 2H, CHₐᵣₒₘ), 7.8 (d, 2H, CHₐᵣₒₘ), 8.1 (d, 2H, CHₐᵣₒₘ), 8.3 (d, 2H, CHₐᵣₒₘ);. UV-Vis (EtOH) max : 570 nm, ( max) 5.10⁴.

### Example 2

0.05 mol of 2,3,3-Trimethyl-3H-indole and 0.05 mol 1,2,3-Trifluoro-5-iodomethylbenzene are heated to reflux in 70 ml of methylethylketone for 15 hours. To this solution is then added 0.055 mol of 4-pyrrolidinobenzaldehyde. After a further 7 hours at reflux, the mixture is cooled to room temperature and the precipitated crystalline dye of formula (Ib) is filtered, washed with cold alcohol, water and dried in vacuo to give crude 3,3-Dimethyl-2-[2-(4-pyrrolidin-1-yl-phenyl)-vinyl]-1-(3,4,5-trifluoro-benzyl)-3H-indolium iodide.

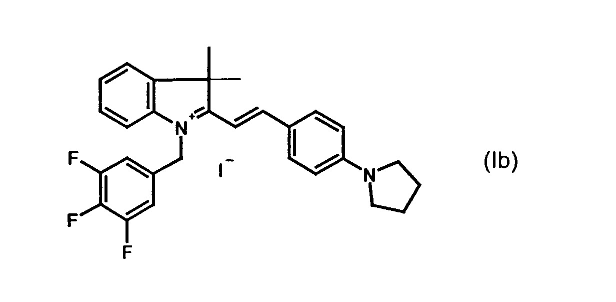

Yield : 81%; NMR ¹H (360 MHz, D₆-DMSO): 1.2 (q, 4H, CH₂), 1.8 (s, 6H, CH₃), 3.6 (q, 4H, CH₂), 6.0 (s, 2H, CH₂), 7.0 (d, 2H, CH), 7.4 (s, 2H, CHₐᵣₒₘ), 8.1 (d, 2H, CHₐᵣₒₘ), 8.3 (d, 2H, CHₐᵣₒₘ) UV-Vis (EtOH) λmax : 571 nm, ε (λmax) 9.10⁴.

### Example 3

0.05 mol of 2-[2-(4-Diethylamino-phenyl)-vinyl]-3,3-dimethyl-1-pentafluorophenylmethyl-3H-indolium iodide and 0.06 mol of sodium hexafluoroantimonate are heated to reflux for 10 hours in ethanol. After this period, the suspension is cooled to room temperature and the precipitated crystalline dye of formula (Ic) is filtered, washed with cold alcohol, water and dried in vacuo to 2-[2-(4-Diethylamino-phenyl)-vinyl]-3,3-dimethyl-1 -pentafluorophenylmethyl- 3H-indolium hexafluoro - antimonate.

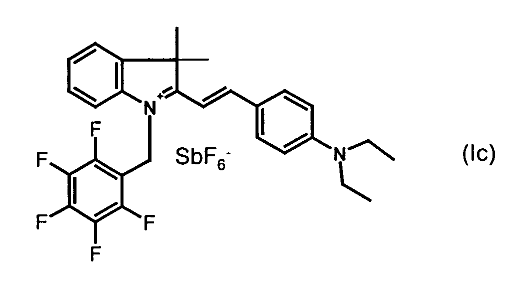

Yield : 93%; NMR ¹H (360 MHz, D₆-DMSO): 1.2 (t, 6H, CH₃), 1.8 (s, 6H, CH₃), 3.6 (q, 4H, CH₂), 6.0 (s, 2H, CH₂), 7.0 (d, 2H, CH), 7.4 (d, 2H, CHₐᵣₒₘ), 7.8 (d, 2H, CHₐᵣₒₘ), 8.1 (d, 2H, CHₐᵣₒₘ), 8.3 (d, 2H, CHₐᵣₒₘ); µA : calc. C 47.5 H 3.6 N 3.8%; Found C 47.0 H 3.7 N 3.9 %. UV-Vis (MeOH) λ max : 569.5 nm, ε (λ max) : 1.2 10⁵ 1. mol-¹.cm⁻¹

### Example 4

0.05 mol of 3,3-Dimethyl-2-[2-(4-pyrrolidin-1-yl-phenyl)-vinyl]-1-(3,4,5-trifluorobenzyl)-3H-indolium iodide and 0.06 mol of sodium hexafluoroantimonate are heated to reflux for 10 hours in ethanol. After this period, the suspension is cooled to room temperature and the precipitated crystalline dye of formula (Id) is filtered, washed with cold alcohol, water and dried in vacuo to 3,3-Dimethyl-2-[2-(4-pyrrolidin-1-yl-phenyl)-vinyl]-1-(3,4,5-trifluoro-benzyl)-3H-indolium hexafluoro-antimonate.

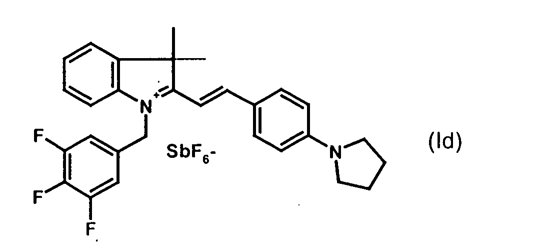

Yield : 96%; NMR ¹H (360 MHz, D₆-DMSO): 2.0 (m, 4H, CH₂), 1.8 (s, 6H, CH₃), 3.6 (q, 4H, CH₂), 5.8 (s, 2H, CH₂), 7.0 (d, 2H, CH), 7.3 (d, 2H, CHₐᵣₒₘ), 7.4 (d, 2H, CHₐᵣₒₘ), 7.6 (d, 2H, CHₐᵣₒₘ), 8.1 (d, 2H, CHₐᵣₒₘ), 8.3 (d, 2H, CHₐᵣₒₘ); µA : calc. C 49.9 H 4.0 N 4.02 %; Found C 49.9 H 4.0 N 4.1 %. λmax (UV-Vis): 572 nm. ε : 1.10⁵

### Example 5

0.06 mol of 2,3,3-Trimethyl-3H-indole and 0.063 mol of 4-Bromo-2-fluoro-1-iodomethyl-benzene are heated to reflux in 50 ml of methylethylketone for 8 hours. To this solution is then added 0.06 mol of 4-diethylamino benzaldehyde. After 8 hours at this temperature, the mixture is cooled to room temperature and the precipitated crystalline dye of formula (Ie) is filtered, washed with cold alcohol, water and dried in vacuo to give 1-(4-Bromo-2-fluoro-benzyl)-2-[2-(4-diethylamino-phenyl)-vinyl]-3,3-dimethyl-3H-indolium; iodide.

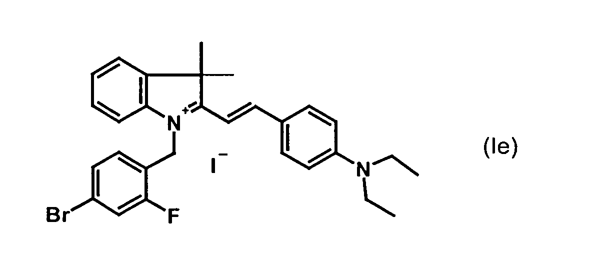

Yield : 78%; NMR ¹H (360 MHz, D₆-DMSO): 1.0 (t, 6H, CH₃), 1.8 (s, 6H, CH₃), 3.6 (q, 4H, CH₂), 6.0 (s, 2H, CH₂), 6.8 (d, 2H, CH), 7.3 (d, 2H, CHₐᵣₒₘ), 7.4 (d, 2H, CHₐᵣₒₘ), 7.6 (s, 1H, CHₐᵣₒₘ), 7.8 (s, 1H, CHₐᵣₒₘ), 7.9 (s, 1H, CHₐᵣₒₘ), 8.1 (d, 2H, CHₐᵣₒₘ), 8.3 (d, 2H, CHₐᵣₒₘ); µA: calc. C 54.9 H 4.9 N 4.4%; Found C 54.7 H 5.3 N 4.5 %. UV-Vis (EtOH) λmax : 566 nm. E : 1.35 .10⁵

### Example 6

0.08 mol of 1-(4-Bromo-2-fluoro-benzyl)-2-[2-(4-diethylamino-phenyl)-vinyl]-3,3-dimethyl-3H-indolium iodide and 0.09 mol of sodium hexafluoroantimonate are heated to reflux for 10 hours in ethanol. After this period, the suspension is cooled to room temperature and the precipitated crystalline dye of formula (If) is filtered, washed with cold alcohol, water and dried in vacuo to give 1-(4-Bromo-2-fluoro-benzyl)-2-[2-(4-diethylamino-phenyl)-vinyl]-3,3-dimethyl-3H-indolium hexafluoro-antimonate.

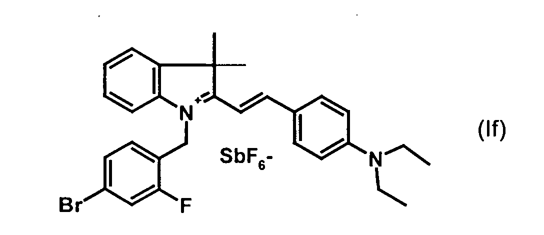

Yield : 98%; NMR ¹H (360 MHz, D₆-DMSO): 1.2 (t, 6H, CH₃), 1.9 (s, 6H, CH₃), 3.7 (q, 4H, CH₂), 6.0 (s, 2H, CH₂), 6.8 (d, 2H, CH), 7.4 (d, 2H, CHₐᵣₒₘ), 7.5 (d, 2H, CHₐᵣₒₘ), 7.7 (s, 1H, CHₐᵣₒₘ), 7.8 (s, 1H, CHₐᵣₒₘ), 8.0 (s, 1H, CHₐᵣₒₘ), 8.2 (d, 2H, CHₐᵣₒₘ), 8.3 (d, 2H, CHₐᵣₒₘ); UV-Vis (MeOH) λ max : 566.5 nm, ε (λ max) : 1.35 10⁵ 1. mol⁻¹.cm⁻¹

### Example 7

0.05 mol of 3,3-Dimethyl-2-[2-(4-pyrrolidin-1-yl-phenyl)-vinyl]-1-(pentafluorobenzyl)-3H-indolium iodide and 0.06 mol of sodium hexafluoroantimonate are heated to reflux for 10 hours in ethanol. After this period, the suspension is cooled to room temperature and the precipitated crystalline dye of formula (Ig) is filtered, washed with cold alcohol, water and dried in vacuo to 3,3-Dimethyl-2-[2-(4-pyrrolidin-1-yl-phenyl)-vinyl]-1-(pentafluorobenzyl)-3H-indolium hexafluoro-antimonate.

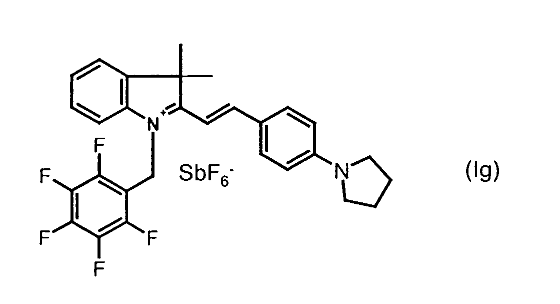

Yield : 96%; NMR ¹H (360 MHz, D₆-DMSO): 2.0 (s, 4H, CH₂), 1.8 (s, 6H, CH₃), 3.6 (q, 4H, CH₂), 5.8 (s, 2H, CH₂), 7.0 (d, 2H, CH), 7.3 (d, 2H, CHₐᵣₒₘ), 7.4 (d, 2H, CHₐᵣₒₘ), 7.6 (d, 2H, CHₐᵣₒₘ), 7.8 (d, 2H, CHₐᵣₒₘ), 8.1 (d, 2H, CHₐᵣₒₘ), 8.3 (d, 2H, CHₐᵣₒₘ); µA : calc. C 49.9 H 4.0 N 4.02 %; Found C 49.9 H 4.0 N 4.1 %. λmax (UV-Vis) : 570.0 nm. ε : 8.10⁴

### Physical data of compounds (Ia) to (Ig) according to Examples 1 to 7

**Table 1:**

| **Compound** | **X**^{**-**} | **λ max [nm]** | **ε (λ max)** |
|---|---|---|---|
| Ia | I⁻ | 570.0 | 5.10⁴ |
| Ib | I⁻ | 571.0 | 9.10⁴ |
| Ic | SbF₆⁻ | 569.5 | 1.2 .10⁵ |
| Id | SbF₆⁻ | 572.0 | 1.0.10⁵ |
| Ie | I⁻ | 566.0 | 1.35 .10⁵ |
| If | SbF₆⁻ | 566.5 | 1.35 .10⁵ |
| Ig | SbF₆⁻ | 570.0 | 8 .10⁴ |

In Table 1 X⁻ is the respective counterion as represented in formula (Ia) to (Ig).
λ max is the wavelenght of maximum absorption in nanometer (nm) and ε (λ max) is the extinction coefficient, giving a value for the efficiency of absorption.

### Example 8

0.30 g of the dye of formula (Ia) obtained from example 1 were dissolved in 10 ml of tetrafluoropropane, and stirred at room temperature for 5 hours. The solution was filtered with a Teflon filter (having 0,2 µm pore size) and spin coated over a substrate to form a dye layer. The substrate was a polycarbonate substrate with 0.6 mm thickness having pregrooves with 150 nm depth, 300 nm width and 800 nm track pitch.
The substrate having the dye layer was dried in a vacuum oven set at 40°C for 12 hours. The optical layers obtained had a uniform and even surface at a thickness of 120 nm.
As a reflective layer, silver was deposited over the dye layer with a thickness of 100 nm. An acrylic UV curable resin was spin-coated over the reflective layer and then cured by radiation of UV rays to form a protective layer.
Finally, the substrate with the reflective layer and the recording layer was combined with another blank substrate with a thickness of 0.6 mm. The final product is a high-density recordable optical disc of about 120 mm diameter.

To evaluate the final product a PULSTEC DDU-1000 evaluation test machine was used to write and read the test results.

The recording conditions were: the constant linear velocity (CLV) is 3.5 m/s, the wavelength is 658 nm, the numerical aperture (NA) is 0.6, and the writing power is 7-14 mW.

The reading conditions were: the CLV is 2.5 m/s, the wavelength is 658nm, the NA is 0.6, and the reading power is 0.5 to 1.5 mW.

### Example 9-14

Optical recording media with an optical layer comprising the dyes obtained according to examples 2 to 7 (compounds of formula (Ib)-(Ig)) were manufactured and tested according to the procedure given for example 8.

**Test results for an optical recording media manufactured according to Example 10 with an optical layer comprising the compound (Ic) as a dye**

**Table 2**

| Substrate | OPC [mW] | Jitter [%] | I₁₄/I_{14H} | PI error |
|---|---|---|---|---|
| Type 1 | 8.2 | 7.9 | 0.605 | 221 |
| Type 2 | 8.2 | 9.5 | 0.594 | 481 |
| Type 3 | 8.5 | 11.0 | 0.581 | 454 |

The substrates of type 1, 2 and 3 were printed with different commercially available stampers e.g. available from Plasmon, UK. The stampers were used without further optimisation.
The "optimal power control" (OPC) represents the adjusted laser power which is sufficient to record pits on the track of a DVD.
The "Jitter value": In optical recording, a non-adapted laser increases the signal deviation. This standard deviation is called the "Jitter value" and it is measured on selected lands or pits of comparable sizes (3T to 11T). According to industrial standards (i.e. the orange book D valid for DVD-R specifications), this value must not exceed 8% for a recording power between 7 and 12 mW. The "Jitter value" can be considered as a signal uniformity index.
I₁₄/I_{14H} indicates the modulated amplitude of recorded signals (also specified in the orange book D). The industrial standard is set to I₁₄/I_{14H} ≥ 0.6.
The "PI error" represents the inner RSPC parity error count and is specified to be below 280 according to industrial standards.

The data of Table 2 clearly indicates, that even without quenchers or optimised groove geometry (optimised stampers), the dyes as of the invention and the optical layers obtained therewith are close to (substrates of type 2 and type 3) or within the industrial specifications (substrate of type 1).
Therefore the high-density optical disk according to the invention provide for the required properties, such as strong absorption, high reflectance and in particular high recording sensitivity. With further optimisation and adaptation of the system to the dyes, the properties will be improved to fully meet the industrial standard in all aspects.

## Claims

1. An indolestyryl dye compound of the formula (I) 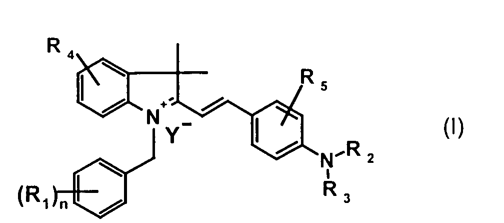 wherein
R₁ independently is halogen;
n is a number from 1 to 5;
R² and R³ are selected from the group consisting of hydrogen atoms, alkyl groups containing one to eight carbon atoms , alkoxy groups containing one to eight carbon atoms and one to four oxygen atom, alkylester groups (-CO₂R⁶) containing one to eight carbon atoms, and a pyrrolidine ring formed by connecting R² and R³, a julolidine ring formed by one of R² or R³;
R⁴ and R⁵ are selected the group consisting of hydrogen atoms, hydroxyl groups, alkyl groups with one to eight carbon atoms (C₁₋₈), trifluoromethyl groups, alkoxy groups containing one to eight carbon atoms and one to four oxygen atom, carboxylic acid groups, nitric acid groups, amide groups (-CONR⁷R⁸), sulfonic acid groups, -SO₃R⁸, alkylester groups (-CO₂R⁶) containing one to eight carbon atoms, and halogen;
R⁶ is selected from the group consisting of an alkyl group with one to eight carbon atoms (C₁₋₈), C₂F₄ and CF₃;
R⁷ and R⁸ are independently selected from the group consisting of hydrogen and alkyl group with one to six carbon atoms (C₁₋₆);
Y⁻ is selected from ClO₄⁻, SBF₆⁻, PF₆⁻, BF₄⁻, TCNQ⁻ (Tetracyano-p-quinodimethane), TCNE⁻ (Tctracyanoethylene), Cl⁻, Br⁻, I⁻.

2. An indolestyryl dye according to claim 1, wherein
R₁ independently is F, Cl, Br,
n is a number from 3 to 5,
R₂ and R₃ are selected from the group consisting of hydrogen atoms, alkyl groups containing one to three carbon atoms , and a pyrrolidine ring formed by connecting R² and R³;
R⁴ and R⁵ are selected from the group consisting of hydroxyl groups, alkyl groups containing one to three carbon atoms, nitric acid groups and halogen;
Y⁻ is selected from ClO₄⁻, SbF₆⁻, PF₆⁻, BF₄⁻, TCNQ⁻ (Tetracyano-p-quinodimethane), TCNE⁻ (Tetracyanoethylene), Cl⁻, Br⁻, I⁻.

3. An indolestyryl dye according to claim 2, wherein
R₁ is F;
n is 3 or 5,
R₂ and R₃ are selected from ethyl or a pyrrolidine ring formed by connecting R₂ and R₃;
R⁴ and R⁵ are selected from methyl, hydroxy, nitro or chloro;
Y⁻ is selected from SbF₆⁻, PF₆⁻ , Cl⁻, Br⁻, I⁻.

4. An indolestyryl dye according to claim 3, wherein
the position for R₄ is para to the position wheron the N-heterocyclic ring is attached;
and the positions for R₅ is ortho to the ethylene bridge.

5. An optical layer comprising an indolestyryl dye compound according to formula (I) as defined in claims 1 to 4.

6. An optical layer comprising a mixture of indolestyryl dye compounds according to formula (I) as defined in claims 1 to 4.

7. A method for producing an optical layer according to claims 5 or 6, comprising the following steps
(e) providing a substrate
(f) dissolving a compound of formula (I) as defined in claims 1 to 4 or a mixture of compounds as defined in claims 1 to 4 in an organic solvent to form a solution,
(g) coating the solution (b) on the substrate (a);
(h) evaporating the solvent to form a dye layer.

8. A method according to claim 7, wherein the organic solvent is selected from C₁₋₈ alcohol , halogen substituted C₁₋₈ alcohols, C₁₋₈ ketone, C₁₋₈ ether, halogen substituted C₁₋₄ alkane, or amides.

9. A method according to claim 8, wherein the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and
the amides are selected from dimethyl formamide or dimethylacetamide.

10. A method according to claim 7, wherein the substrate is polycarbonate (PC) or polymethylmethacrylate (PMMA).

11. A method according to claim 7, wherein the optical layer (dye layer) has a thickness from 70 to 250 nm.

12. An optical recording medium comprising an optical layer according to claims 5 or 6, wherein at least one dye compound of the formula (I) as defined in claims 1 to 4 is used.
